# EUROPÄISCHE PATENTSCHRIFT

(11) **EP 1 668 813 B1**
(45) Veröffentlichungstag und Bekanntmachung des Hinweises auf die Patenterteilung: **23.06.2010**
(21) Anmeldenummer: 04766435.4
(22) Anmeldetag: 05.08.2004
(51) Int. Cl.: H04L 1/08

(54) **VERFAHREN ZUM VERBESSERN DER QUALITÄT EINER SPRACHÜBERTRAGUNG ÜBER EINE LUFTSCHNITTSTELLE**
METHOD FOR IMPROVING THE QUALITY OF VOICE TRANSMISSION VIA A RADIO INTERFACE
PROCEDE POUR AMELIORER LA QUALITE D'UNE TRANSMISSION VOCALE PAR L'INTERMEDIAIRE D'UNE INTERFACE RADIO

(30) Priorität: 29.09.2003 DE 10345166
(43) Veröffentlichungstag der Anmeldung: 14.06.2006
(73) Patentinhaber: SIEMENS AKTIENGESELLSCHAFT, 80333 München (DE)
(72) Erfinder: HEITMANN, Jürgen, 82061 Neuried (DE)
(74) Vertreter: Fritzsche, Thomas
(86) Internationale Anmeldenummer: PCT/EP2004/051730
(87) Internationale Veröffentlichungsnummer: WO 2005/034416

(56) Entgegenhaltungen:
- EP-A- 0 738 056
- US-A- 5 859 875
- US-A1- 2002 172 162
- US-A1- 2003 031 198

## Beschreibung

Zeitgemäße Kommunikationssysteme weisen in zunehmendem Maße mobile Kommunikationseinrichtungen, insbesondere mobile Sprachkommunikationseinrichtungen auf. Bei einer drahtlosen Sprachübertragung werden in Echtzeit zu übertragende Sprachsignale zumeist digitalisiert und in Form von Datenpaketen über eine Luftschnittstelle übertragen. Im Bereich der bidirektionalen drahtlosen Sprachkommunikation haben sich unterschiedliche Übertragungsstandards, wie z.B. DECKT (Digital European Cordless Telecommunications) oder GSM (Global System for Mobile Communications) etabliert. Darüber hinaus sind gegenwärtig Tendenzen zu beobachten, die darauf abzielen, auch sogenannte WLANs (Wireless Local Area Networks) zur drahtlosen Sprachübertragung zu nutzen.

Die genannten drahtlosen Übertragungstechniken verwenden Übertragungsfrequenzen in der Größenordnung von einem bis zu einigen Gigahertz. Dies entspricht Übertragungswellenlängen von circa 30 cm und darunter.

In funktechnisch schwierigen Umgebungen mit vielen funkwellenreflektierenden Flächen, z.B. in oder zwischen Gebäuden führen häufige Funkreflexionen zu Mehrwegeempfang und Funkwellenüberlagerungen. Dabei treten häufig destruktive Interferenzen oder Schwingungsknoten auf, die an einigen Stellen im Raum zu lokalen Signalauslöschungen führen können. Ein mobiles Endgerät, das von seinem Benutzer bei aufgebauter Sprachverbindung in einer solchen funktechnisch schwierigen Umgebung bewegt wird, überstreicht während der Bewegung häufig derartige Stellen mit Signalauslöschung oder zumindest Signalabschwächung. Dies macht sich während eines Gesprächs in der Regel durch Knackgeräusche oder Übertragungsunterbrechungen bemerkbar, die vom Benutzer meist als sehr störend empfunden werden und die wahrgenommene Sprachqualität erheblich verschlechtern.

Zur Reduzierung dieser Beeinträchtigungen werden bei schmalbandigen Sprachübertragungssystemen, wie z. B. GSM sogenannte Equalizer zur Unterdrückung von Mehrwegeempfang eingesetzt. Bei Funkübertragungen mit höheren Bandbreitenbedarf, z.B. bei DECT-oder WLAN-Systemen, erfordert ein solcher Equalizer allerdings einen erheblich höheren Realisierungsaufwand. Zudem würde ein Equalizer die Empfangssituation bei lokaler Signalauslöschung nicht verbessern.

Eine weitere Möglichkeit zur Vermeidung von Empfangsbeeinträchtigungen in funktechnisch schwieriger Umgebung besteht darin, mindestens zwei räumlich voneinander getrennte Antennen, gegebenenfalls mit getrennten Empfängern einzusetzen. Im Betrieb wird jeweils zu derjenigen Antenne oder demjenigen Empfänger geschaltet, dessen Signal das beste Signal-zu-Rausch-Verhältnis aufweist. Diese Technik wird häufig auch als Antennen-Diversity oder Raum-Diversity bezeichnet. Da hierbei eine zusätzliche Antenne und in der Regel eine zusätzliche Empfangsschaltung erforderlich ist, ist eine Realisierung jedoch verhältnismäßig aufwendig.

Das Dokument US-A-5859875 (Kato et al.), 12. Jan. 1999, offenbart die Übertragung von Sprachdatenpaketen, bei dem eine Zeitspanne nach der Übertragung des ersten Sprachdatenpakets ein zweites Sprachdatenpaket übertragen wird.

Es ist Aufgabe der vorliegenden Erfindung ein Verfahren zum Verbessern der Qualität einer drahtlosen Sprachübertragung anzugeben, das mit geringerem Aufwand realisierbar ist.

Gelöst wird diese Aufgabe durch ein Verfahren mit den Merkmalen des Patentanspruchs 1.

Erfindungsgemäß wird zum Verbessern der Qualität einer Sprachübertragung über eine Luftschnittstelle eine vorgegebene Zeitspanne nach einer Übertragung eines ersten einen Sprachabschnitt repräsentierenden Sprachdatenpakets ein zweites den Sprachabschnitt repräsentierendes Sprachdatenpaket über die Luftschnittstelle übertragen. Die Luftschnittstelle kann hierbei z.B. gemäß dem DECT- oder GSM-Standard oder gemäß einem WLAN-Standard wie IEEE-802.11 realisiert sein. Empfangsseitig wird jeweils für das erste und für das zweite Sprachdatenpaket ein Maß für eine Übertragungsqualität ermittelt und dasjenige der beiden Sprachdatenpakete weiterverarbeitet, das die bessere Übertragungsqualität aufweist. Das Maß für die Übertragungsqualität kann z.B. aus der Empfangsfeldstärke, dem Signal-zu-Rausch-Verhältnis und/oder der Häufigkeit von Übertragungsfehlern bei Empfang eines jeweiligen Datenpakets abgeleitet werden.

Durch die verzögerte Übertragung eines denselben Sprachabschnitt repräsentierenden Sprachdatenpakets kann eine Fehlerhäufigkeit in den weiter zu verarbeitenden Sprachdatenpaketen, insbesondere bei sich bewegenden Benutzern erheblich reduziert und somit die Sprachübertragungsqualität wesentlich verbessert werden. Aufgrund der Verteilung des ersten und des zweiten Sprachdatenpakets auf verschiedene Zeitintervalle wird die Sprachübertragung unempfindlicher gegenüber kurzzeitigen Funkstörungen, z.B. durch Zündfunken, und insbesondere gegenüber einem kurzzeitigen Durchgang einer mit dem Benutzer bewegten Empfangsantenne der Luftschnittstelle durch Raumbereiche mit lokaler Signalauslöschung (Schwingungsknoten).

Auf diese Weise kann auch in funktechnisch schwieriger Umgebung eine hohe Sprachübertragungsqualität gewährleistet werden, ohne dass zusätzliche Antennen oder Empfangsschaltungen erforderlich wären.

Vorteilhafte Ausführungsformen und Weiterbildungen der Erfindung sind in den abhängigen Ansprüchen angegeben.

Gemäß einer ersten Ausführungsform kann das zweite Sprachdatenpaket in einem anderen Übertragungskanal oder über eine andere logische Verbindung der Luftschnittstelle übertragen werden als das erste Sprachdatenpaket. Auf diese Weise kann ein Einfluss kanalspezifischer Störungen verringert werden. Bei einer DECT-Luftschnittstelle kann z.B. eine Sprachverbindung mit einer Übertragungsrate von 32 kBit/sec auf mindestens zwei Datenkanäle mit zusammen mindestens 64 kBit/sec aufgeteilt werden. Bei einer WLAN-Luftschnittstelle kann eine Sprachverbindung entsprechend auf mindestens zwei logische Kanäle oder logische Verbindungen aufgeteilt werden.

Vorzugsweise können zu übertragende Sprachdaten mittels eines spezifischen Sprachkompressionsverfahrens, z.B. gemäß der ITU-T-Empfehlung G.729 senderseitig komprimiert und empfangsseitig dekomprimiert werden. Das Sprachkompressionsverfahren ist vorzugsweise an die Erfordernisse einer Echtzeitsprachübertragung angepasst und so ausgestaltet, dass ein kontinuierlicher Eingangs-Sprachdatenstrom mit möglichst geringer Verzögerung in einen kontinuierlichen Ausgangs-Sprachdatenstrom mit geringerer Datenrate umgesetzt wird.

Vorteilhafterweise können die komprimierten Sprachdaten senderseitig in das erste und in das zweite Sprachdatenpaket eingefügt werden, so dass das erste und das zweite Sprachdatenpaket aufgrund der durch die Komprimierung erzielten, reduzierten Übertragungsrate im selben Übertragungskanal der Luftschnittstelle übertragen werden können. Dies ist insofern vorteilhaft, als kein zusätzlicher Übertragungskanal der Luftschnittstelle belegt wird. So kann z.B. bei einer Übertragung gemäß dem DECT-Standard anstelle des dort verwendeten ADPCM-Sprachkompressionsverfahrens (ADPCM: Adaptive differentielle Puls-Code-Modulation) ein anderes Sprachkompressionsverfahren, z.B. gemäß dem G.729-Standard, eingesetzt werden, das auf eine niedrigere Datenrate umsetzt als das ADPCM-Verfahren. Bei Verwendung einer Sprachkompression gemäß G.729-Standard wird auf eine Datenrate von 8 kBit/sec umgesetzt, so dass die Übertragungsrate von 32 kBit/sec eines einzelnen Übertragungskanals der DECT-Luftschnittstelle für die Übertragung sowohl des ersten als auch des zweiten Sprachdatenpakets ausreicht.

Nach einer weiteren Ausführungsform des erfindungsgemäßen Verfahrens kann das Maß für die Übertragungsqualität des ersten und zweiten Sprachdatenpakets durch Bilden und Überprüfen einer Quersumme und/oder eines CRC-Kontrollbitmusters aus in den Sprachdatenpaketen enthaltenen Daten ermittelt werden. Eine hierzu erforderliche Quersummen- und/oder CRC-Information kann z.B. in einem zugeordneten Signalisierungskanal oder im Nutzdatenkanal selbst übertragen werden.

Nach der Erfindung wird geprüft, ob über die Luftschnittstelle zu übertragende Daten Sprachdaten sind oder nicht. Die Übertragung des zweiten Sprachdatenpakets erfolgt dann abhängig vom Prüfungsergebnis. Die Entscheidung, ob zu übertragende Daten Sprachdaten sind, kann hierbei z.B. anhand einer den Daten zugeordneten Signalisierungsinformation, Prioritätsinformation oder Dienstgüteangabe (Quality of Service) oder anhand der Datenpaketgröße getroffen werden. Vorzugsweise kann bei negativem Prüfungsergebnis die Übertragung des zweiten Datenpakets unterdrückt werden.

Ein Ausführungsbeispiel der Erfindung wird nachfolgend anhand der Zeichnungen näher erläutert.

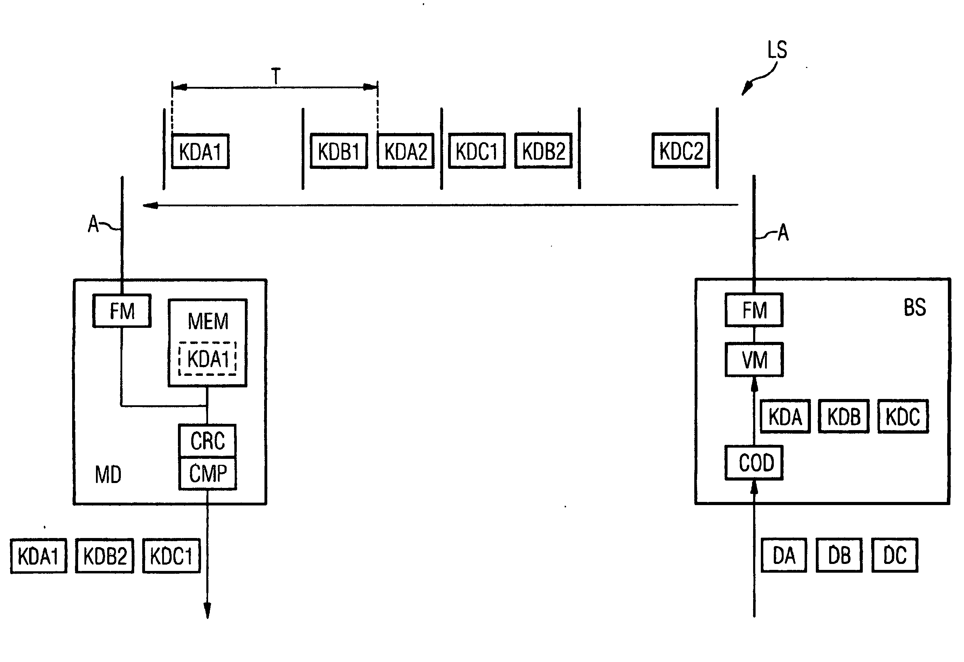

Die Figur zeigt in schematischer Darstellung eine Basisstation und eine mobile Endeinrichtung, zwischen denen eine drahtlose Sprachverbindung aufgebaut ist.

In der Figur sind eine Basisstation BS sowie eine mobile Endeinrichtung MD schematisch dargestellt. Die Basisstation BS kann z.B. gemäß dem DECT- oder GSM-Standard oder als sogenannter WLAN-Access-Point realisiert sein. Die mobile Endeinrichtung MD kann beispielsweise ein Schnurlostelefon gemäß DECT-Standard, ein Mobiltelefon gemäß GSM-Standard oder ein anderes mobiles Endgerät, wie z.B. ein Laptop oder PDA (Personal Digital Assistant) mit WLAN-Schnittstelle sein.

Die mobile Endeinrichtung MD ist über eine Luftschnittstelle LS an die Basisstation BS gekoppelt und es sei angenommen, dass eine drahtlose Echtzeit-Sprachverbindung besteht. Die Luftschnittstelle LS ist in der Figur durch einen waagerechten Pfeil angedeutet und kann z.B. gemäß dem DECT- oder GSM-Standard oder gemäß einem IEEE-802.11-WLAN-Standard ausgestaltet sein. Die Luftschnittstelle LS weist vorzugsweise mehrere Übertragungskanäle zur Sprach- und/oder Datenübertragung auf, so dass mehrere logische Verbindungen aufbaubar sind. In der Figur wird indessen aus Übersichtlichkeitsgründen nur einer dieser Übertragungskanäle veranschaulicht.

Zur Realisierung der Luftschnittstelle LS verfügen die mobile Endeinrichtung MD sowie die Basisstation BS jeweils über ein Funkmodul FM mit Funkantenne A.

Die Basisstation BS verfügt weiterhin über ein mit deren Funkmodul FM gekoppeltes Verzögerungsmodul VM sowie über einen mit dem Verzögerungsmodul VM gekoppelten Codec COD zur Sprachkomprimierung und -Dekomprimierung.

Im Rahmen der Sprachverbindung werden der Basisstation BS Sprachdaten DA, DB und DC zugeleitet, die von der Basisstation BS zur mobilen Endeinrichtung MD über die Luftschnittstelle LS zu übertragen sind. Die zu übertragenden Sprachdaten können z.B. als Sprachdatenpakete gemäß der TCP/IP-Protokollfamilie oder als Sprachdatenstrom vorliegen. Im Folgenden werden sowohl TCP/IP-Sprachdatenpakete als auch einzelne Abschnitte eines Sprachdatenstroms als Sprachdatenpakete bezeichnet und durch die Bezugszeichen DA, DB und DC referenziert.

Für die der Basisstation BS zugeleiteten Sprachdatenpakete DA, DB und DC wird zunächst geprüft, ob sie Sprachdaten enthalten oder nicht. Bei DECT-Systemen kann dies beispielsweise anhand einer den zu prüfenden Datenpaketen zugeordneten Signalisierung erkannt werden. Im vorliegenden Ausführungsbeispiel werden die Sprachdatenpakete DA, DB und DC als solche erkannt und infolgedessen dem Codec COD zugeführt. Der Codec COD komprimiert die in den Sprachdatenpaketen DA, DB und DC enthaltenen Sprachdaten in quasikontinuierlicher Weise und gibt komprimierte Sprachdatenpakete KDA, KDB und KDC aus, die an das Verzögerungsmodul VM weitergeleitet werden. Das jeweilige komprimierte Sprachdatenpaket KDA, KDB bzw. KDC enthält hierbei jeweils die komprimierten Sprachdaten aus dem Sprachdatenpaket DA, DB bzw. DC. Es sei im Folgenden angenommen, dass die komprimierten Sprachdatenpakete KDA, KDB und KDC um mindestens den Faktor 2 gegenüber den Sprachdatenpaketen DA, DB und DC komprimiert sind.

Der Codec COD kann beispielsweise gemäß der ITU-T-Empfehlung G.729 ausgestaltet sein. Ein derartiger Codec setzt in komprimierte Sprachdaten mit einer Sprachdatenrate von 8 kBit/sec um. Bei DECT-Systemen kann eine derartige Sprachkomprimierung anstelle der dort üblichen ADPCM-Codierung mit einer Sprachdatenrate von 32 kBit/sec eingesetzt werden.

Durch das Verzögerungsmodul VM wird ein jeweiliges komprimiertes Sprachdatenpaket KDA, KDB bzw. KDC einerseits sofort an das Funkmodul FM weitergeleitet, um von diesem als erstes das jeweilige Sprachdatenpaket DA, DB bzw. DC repräsentierendes Sprachdatenpaket KDA1, KDB1 bzw. KDC1 über die Luftschnittstelle LS übertragen zu werden. Andererseits wird durch das Verzögerungsmodul VM ein jeweiliges ihm zugeleitetes, komprimiertes Sprachdatenpaket KDA, KDB bzw. KDC für eine vorgegebene Verzögerungszeit T zwischengespeichert, um nach Ablauf dieser Verzögerungszeit T erneut als zweites das betreffende Sprachdatenpaket DA, DB bzw. DC repräsentierendes Sprachdatenpaket KDA2, KDB2 bzw. KDC2 vom Funkmodul FM über die Luftschnittstelle LS übertragen zu werden. Auf diese Weise wird der Sprachdateninhalt jedes komprimierten Sprachdatenpakets KDA, KDB bzw. KDC jeweils doppelt im Abstand der Verzögerungszeit T über die Luftschnittstelle LS übertragen.

Vorzugsweise ist die Verzögerungszeit T einerseits so klein zu wählen, dass eine dadurch bedingte Übertragungsverzögerung vom Benutzer nicht als störend empfunden wird. Andererseits ist die Verzögerungszeit T so groß zu wählen, dass nach Möglichkeit nicht beide, ein jeweiliges Sprachdatenpaket DA, DB bzw. DC repräsentierenden Sprachdatenpakete KDA1, KDA2 bzw. KDB1, KDB2 bzw. KDC1, KDC2 von kurzzeitigen Übertragungsausfällen, z.B. aufgrund von Funkstörungen oder Durchgängen der Empfangsantenne A durch Schwingungsknoten, betroffen sind. Vorzugsweise kann als Verzögerungszeit T die Länge eines Funkrahmens der Luftschnittstelle LS oder ein Vielfaches dieser Länge, z.B. 20 ms oder ein Vielfaches davon bei DECT-Systemen, gewählt werden.

Falls die oben erwähnte Prüfung ergibt, dass die zu übertragenden Datenpakete keine Sprachdaten enthalten, werden diese Datenpakete unter Umgehung des Codecs COD und des Verzögerungsmoduls VM dem Funkmodul FM zugeleitet. Auf diese Weise wird eine doppelte Übertragung dieser Datenpakete über die Luftschnittstelle LS vermieden.

Im vorliegenden, von der Figur veranschaulichten Ausführungsbeispiel werden die ersten und die zweiten Sprachdatenpakete KDA1, KDB1, KDC1 und KDA2, KDB2, KDC2 im selben Kanal bzw. innerhalb derselben logischen Verbindung über die Luftschnittstelle LS übertragen. Da die Sprachdatenpakete KDA1, KDB1, KDC1 und KDA2, KDB2, KDC2, wie oben angenommen, um mindestens den Faktor 2 gegenüber den Sprachdatenpaketen DA, DB und DC komprimiert sind, kann eine doppelte Anzahl komprimierter Sprachdatenpakete in einem einzigen, eigentlich nur für eine Sprachverbindung vorgesehenen Übertragungskanal übermittelt werden.

Alternativ dazu könnten die ersten und die zweiten Sprachdatenpakete KDA1, KDB1, KDC1 und KDA2, KDB2, KDC2 in verschiedenen Kanälen oder über verschiedene logische Verbindungen über die Luftschnittstelle LS übermittelt werden. Diese A1-ternative ist insbesondere für WLAN-Systeme bedeutsam, da bei solchen Systemen häufig bereits vorher komprimierte Sprachdaten zu übertragen sind, die keine weitere Kompression um mindestens den Faktor 2 erlauben. In solchen Fällen können die zu übertragenden Sprachdaten zusätzlich dahingehend geprüft werden, ob noch eine Kompression um den Faktor 2 möglich ist oder nicht. Abhängig vom Prüfungsergebnis können die Sprachdaten dann entweder zusätzlich komprimiert und im selben Übertragungskanal oder nicht weiter komprimiert und in verschiedenen Übertragungskanälen übermittelt werden.

Im vorliegenden Ausführungsbeispiel werden die ersten und die zweiten Sprachdatenpakete KDA1, KDB1, KDC1 und KDA2, KDB2, KDC2 in eigentlich jeweils nur für ein Datenpaket vorgesehenen Funkrahmen der Luftschnittstelle LS übertragen. Die Funkrahmen sind in der Figur durch senkrechte Linien angedeutet. Im zuerst gesendeten Funkrahmen wird das erste Sprachdatenpaket KDA1, im nachfolgenden Funkrahmen das erste Sprachdatenpaket KDB1 und das zweite Sprachdatenpaket KDA2, im darauffolgenden Funkrahmen das erste Sprachdatenpaket KDC1 und das zweite Sprachdatenpaket KDB2 und im letzten Funkrahmen das zweite Sprachdatenpaket KDC2 übertragen. Auf diese Weise wird für ein jeweiliges erstes Sprachdatenpaket KDA1, KDB1 bzw. KDC1 jeweils ein zu diesem inhaltsgleiches, zweites Sprachdatenpaket KDA2, KDB2 bzw. KDC2 im Zeitabstand T über die Luftschnittstelle LS zur mobilen Endeinrichtung MD übertragen.

Die mobile Endeinrichtung MD verfügt über einen Speicher MEM zum Speichern eines jeweiligen ersten Sprachdatenpakets KDA1, KDB1 bzw. KDC1, über eine Fehlerkennungseinrichtung CRC sowie über eine mit dieser gekoppelten Vergleichseinrichtung CMP. Der Speicher MEM und die Fehlererkennungseinrichtung CRC sind mit dem Funkmodul FM der mobilen Endeinrichtung MD gekoppelt.

Die vom Funkmodul FM empfangenen ersten Sprachdatenpakete KDA1, KDB1, KDC1 werden im Speicher MEM jeweils bis zum Empfang des zugehörigen zweiten Sprachdatenpakets KDA2, KDB2 bzw. KDC2 zwischengespeichert. Darüber hinaus wird jedes empfangene Sprachdatenpaket KDA1, KDB1, KDC1, KDA2, KDB2 und KDC2 der Fehlererkennungseinrichtung CRC zugeleitet, die jeweils ein Maß für die Übertragungsqualität des betreffenden Sprachdatenpakets ermittelt.

Im vorliegenden Ausführungsbeispiel wird zunächst das erste Sprachdatenpaket KDA1 im Speicher MEM bis zum Empfang des zugehörigen zweiten Sprachdatenpakets KDA2 zwischengespeichert. Nach Empfang des zweiten Sprachdatenpakets KDA2 wird das für dieses ermittelte übertragungsqualitätsmaß mit dem für das gespeicherte erste Sprachdatenpaket KDA1 ermittelten Übertragungsqualitätsmaß durch die Vergleichseinrichtung CMP verglichen. Anschließend wird dasjenige der beiden Sprachdatenpakete KDA1 und KDA2 von der Vergleichseinrichtung CMP weitergegeben, das die bessere Übertragungsqualität aufweist. Für das vorliegende Ausführungsbeispiel sei angenommen, dass das erste Sprachdatenpaket KDA1 eine bessere Übertragungsqualität als das zugehörige zweite Sprachdatenpaket KDA2 aufweist und infolgedessen weitergegeben wird. Analog dazu wird auch jeweils die Übertragungsqualität der weiteren ersten Sprachdatenpakete KDB1, KDC1 mit der Übertragungsqualität des jeweils zugehörigen, zweiten Sprachdatenpakets KDB2 bzw. KDC2 verglichen und jeweils dasjenige Sprachdatenpaket mit der besseren Übertragungsqualität, hier KDB2 und KDC1, weitergeleitet. Die weitergeleiteten Sprachdatenpakete KDA1, KDB2 und KDC1 können anschließend durch einen weiteren Codec (nicht dargestellt) dekomprimiert und zu einem Sprachdatenstrom zusammengesetzt werden, der schließlich akustisch ausgegeben werden kann.

## Patentansprüche

1. Verfahren zum Verbessern der Qualität einer Sprachübertragung über eine Luftschnittstelle (LS), bei dem
a) senderseitig geprüft wird, ob die über die Luftschnittstelle (LS) zu übertragenden Daten Sprachdaten sind,
b) ein erstes Sprachdatenpaket (KDA1, KDB1, KDC1) über die Luftschnittstelle (LS) übertragen und empfangsseitig gespeichert wird,
c) falls die Prüfung ergibt, dass die zu übertragenden Daten Sprachdaten sind,
d) wird eine vorgegebene Zeitspanne (T) nach der Übertragung des ersten Sprachdatenpakets (KDA1, KDB1, KDC1) ein zweites Sprachdatenpaket (KDA2, KDB2, KDC2) über die Luftschnittstelle (LS) übertragen, das dieselben Daten wie das erste Datenpaket (KDA1, KDB1, KDC1) enthält,
e) wird empfangsseitig jeweils für das erste und für das zweite Sprachdatenpaket ein Maß für eine Übertragungsqualität ermittelt und
f) wird dasjenige der beiden Sprachdatenpakete weiterverarbeitet, das die bessere Übertragungsqualität aufweist,
g) falls die Prüfung ergibt, dass die zu übertragenden Daten keine Sprachdaten sind, wird die Übertragung des zweiten Sprachdatenpakets (KDA2, KDB2, KDC2) unterdrückt.

2. Verfahren nach Anspruch 1,
**dadurch gekennzeichnet,**
**dass** das zweite Sprachdatenpaket (KDA2, KDB2, KDC2) in einem anderen Übertragungskanal der Luftschnittstelle (LS) übertragen wird als das erste Sprachdatenpaket (KDA1, KDB1, KDC1).

3. Verfahren nach einem der vorhergehenden Ansprüche,
**dadurch gekennzeichnet,**
**dass** zu übertragende Sprachdaten mittels eines Sprachkompressionsverfahrens senderseitig komprimiert und empfangsseitig dekomprimiert werden.

4. Verfahren nach Anspruch 3,
**dadurch gekennzeichnet,**
**dass** in das erste und in das zweite Sprachdatenpaket die komprimierten Sprachdaten eingefügt werden, und
**dass** das erste und das zweite Sprachdatenpaket im selben Übertragungskanal der Luftschnittstelle (LS) übertragen werden.

5. Verfahren nach einem der vorhergehenden Ansprüche,
**dadurch gehennzeichnet,**
dass das Maß für die Übertragungsqualität des ersten und zweiten Sprachdatenpakets durch Bilden und Überprüfen einer Quersumme und/oder eines CRC-Kontrollbitmusters (CRC), wobei CRC die Abkürzung für Cyclic Redundancy Check ist, aus in den Sprachdatenpaketen enthaltenen Daten ermittelt wird.

6. Verfahren nach einem der vorhergehenden Ansprüche,
**dadurch gekennzeichnet, dass**
a) für zu übertragende Sprachdaten geprüft wird, ob noch eine Kompression möglich ist,
b) abhängig vom Prüfergebnis die Sprachdaten dann entweder zusätzlich komprimiert und im selben Übertragungskanal übertragen werden oder nicht weiter komprimiert und in verschiedenen Übertragungskanälen übertragen werden.

## Claims

1. A method for improving the quality of speech transmission by means of an air interface (LS), in which method
a) it is verified at the transmitter end whether the data to be transmitted by means of the air interface (LS) are speech data,
b) a first speech-data packet (KDA1, KDB1, KDC1) is transmitted by means of the air interface (LS) and stored on the receiver end,
c) whereby should the verification process reveal that the data to be transmitted are indeed speech data, then
d) a second speech-data packet (KDA2, KDB2, KDC2), which contains the same data as the first data packet (KDA1, KDB1, KDC1), is transmitted by means of the air interface (LS) at a pre-determined span of time (T) subsequent to the transmission of the first speech-data packet (KDA1, KDB1, KDC1),
e) a measurement for transmission quality being determined on the receiver side respectively for the first and for the second speech-data packet, and
f) the speech-data packet having the better transmission quality of the two is further processed,
g) while should the verification process reveal that the data to be transmitted are not speech data, then the transmission of the second speech-data packet (KDA2, KDB2, KDC2) is suspended.

2. The method as set forth in claim 1,
**characterised in that**
the second speech-data packet (KDA2, KDB2, KDC2) is transmitted in a different transmission channel of the air interface (LS) from the first speech-data packet (KDA1, KDB1, KDC1).

3. The method as claimed in any one of the preceding claims,
**characterised in that**
the speech data to be transmitted are compressed on the transmitter end by means of a speech compression process and are in turn decompressed on the receiver end.

4. The method as set forth in claim 3,
**characterised in that**
the compressed speech data are inserted into the first and into the second speech-data packet, and **in that** the first and the second speech-data packets are transmitted in the same transmission channel of the air interface (LS).

5. The method as claimed in any one of the preceding claims,
**characterised in that**
the measurement for the transmission quality of the first and of the second speech-data packet is determined by forming and checking a checksum and/or a CRC control bit pattern (CRC), CRC being the abbreviation for cyclic redundancy check, of the data contained in the speech-data packets.

6. The method as claimed in any one of the preceding claims,
**characterised in that**
a) it is checked whether it is possible for another compression to be performed for the speech data to be transmitted,
b) and depending on the results of the checking process, the speech data are either compressed again and transmitted in the same transmission channel or they are not further compressed and are transmitted in different transmission channels.

## Revendications

1. Procédé d'amélioration de la qualité d'une transmission de voix via une interface aérienne (LS), avec lequel
a) il est vérifié au niveau de l'émission si les données à transmettre via l'interface aérienne (LS) sont des données de voix,
b) un premier paquet de données de voix (KDA1, KDB1, KDC1) est transmis via l'interface aérienne (LS) et est sauvegardé au niveau de la réception,
c) s'il résulte de la vérification que les données à transmettre sont des données de voix,
d) au bout d'un laps de temps prédéfini (T) après la transmission du premier paquet de données de voix (KDA1, KDB1, KDC1), il est transmis via l'interface aérienne (LS) un deuxième paquet de données de voix (KDA2, KDB2, KDC2) qui contient les mêmes données que celles du premier paquet de données (KDA1, KDB1, KDC1),
e) au niveau de la réception, il est déterminé à chaque fois une mesure pour la qualité de transmission pour le premier et le deuxième paquet de données de voix et
f) le traitement de celui des deux paquets de données de voix qui présente la meilleure qualité de transmission est poursuivi,
g) s'il résulte de la vérification que les données à transmettre ne sont pas des données de voix, la transmission du deuxième paquet de données de voix (KDA2, KDB2, KDC2) est supprimée.

2. Procédé selon la revendication 1, **caractérisé en ce que** le deuxième paquet de données de voix (KDA2, KDB2, KDC2) est transmis dans un autre canal de transmission de l'interface aérienne (LS) que le premier paquet de données de voix (KDA1, KDB1, KDC1).

3. Procédé selon l'une quelconque des revendications précédentes, **caractérisé en ce que** des données de voix à transmettre sont comprimées au moyen d'un procédé de compression de voix au niveau de l'émission et décomprimées au niveau de la réception.

4. Procédé selon la revendication 3, **caractérisé**
**en ce que** les données de voix comprimées sont introduites dans le premier et le deuxième paquet de données de voix, et
**en ce que** le premier et le deuxième paquet de données de voix sont transmis dans le même canal de transmission de l'interface aérienne (LS).

5. Procédé selon l'une quelconque des revendications précédentes, **caractérisé en ce que** la mesure pour la qualité de la transmission du premier et du deuxième paquet de données de voix est déterminé en formant et vérifiant une somme des chiffres et/ou un modèle binaire de contrôle (CRC), le CRC étant l'abréviation pour Cyclic Redundancy Check (contrôle par redondance cyclique), à partir des données contenues dans le paquet de données de voix.

6. Procédé selon l'une quelconque des revendications précédentes, **caractérisé en ce que**
a) il est vérifié pour des données de voix à transmettre si encore une compression supplémentaire est possible,
b) en fonction du résultat de la vérification, soit les données de voix sont comprimées une fois de plus et transmises dans le même canal de transmission, soit les données de voix ne sont pas comprimées une fois de plus et sont transmises dans différents canaux de transmission.
